# EUROPEAN PATENT SPECIFICATION

(11) **EP 3 768 585 B1**
(45) Date of publication and mention of the grant of the patent: **29.12.2021**
(21) Application number: 19712296.3
(22) Date of filing: 18.03.2019
(51) Int. Cl.: B62M 23/02, B60K 6/54, F16D 43/06, F16D 43/14

(54) **TRANSMISSION GROUP FOR MOTOR VEHICLES COMPRISING A REVERSE GEAR AND RELATED MOTOR VEHICLE**
GETRIEBEGRUPPE FÜR KRAFTFAHRZEUGE MIT RÜCKWÄRTSGANG UND ENTSPRECHENDES KRAFTFAHRZEUG
GROUPE DE TRANSMISSION POUR VÉHICULES À MOTEUR COMPRENANT UN RAPPORT DE MARCHE ARRIÈRE ET VÉHICULE À MOTEUR ASSOCIÉ

(30) Priority: 19.03.2018 IT 201800003739
(43) Date of publication of application: 27.01.2021
(73) Proprietor: PIAGGIO & C. S.p.A., 56025 Pontedera (Pisa) (IT)
(72) Inventor: DOVERI, Stefano, 56025 Pontedera, Pisa (IT)
(74) Representative: Mitola, Marco
(86) International application number: PCT/IB2019/052176
(87) International publication number: WO 2019/180583

(56) References cited:
- FR-A1- 3 024 971
- US-A- 5 193 634

## Description

### FIELD OF APPLICATION

The present invention relates to a transmission group for motor vehicles comprising a reverse gear, and a related motor vehicle.

### BACKGROUND ART

As is known, motor vehicles, with particular reference to motorcycles, normally are not provided with reverse gear.

The result is that they are rather difficult to maneuver in reverse gear because they are heavy and difficult to be moved, especially if the driver is straddling the saddle.

It is also inconvenient to dismount from the saddle to manually push the motor vehicle; moreover, this operation is complicated if there is a passenger on the motor vehicle as well.

The operation of manually pushing is almost impossible if the motor vehicle is not on a perfectly smooth or flat ground.

In order to obviate these drawbacks, certain motorcycles, especially heavy ones, are provided with reverse gear due to a gear change solution which is very similar to those in use in the automotive field. Such solutions however are expensive and necessarily require the use of a gear transmission. Therefore, they are not applicable to motorcycles which use a variator transmission. Known solutions are disclosed by FR3024971A1 and US5193634.

### OVERVIEW OF THE INVENTION

The need is therefore felt to solve the drawbacks and limitations mentioned in reference to the prior art.

Such a need is met by a transmission group for motor vehicles according to claim 1, and by a motor vehicle according to claim 16.

### DESCRIPTION OF THE DRAWINGS

Further features and advantages of the present invention will become more comprehensible from the following description of preferred and non-limiting embodiments thereof, in which:

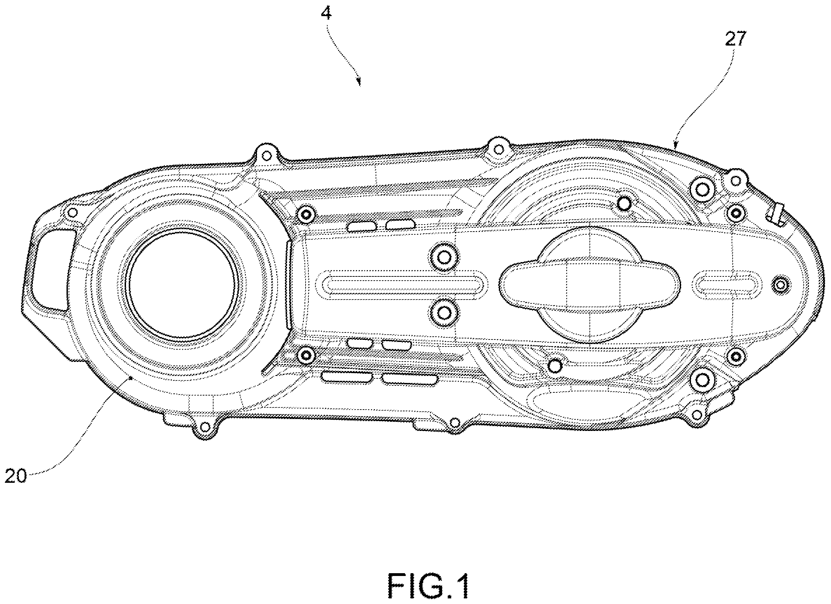

figure 1 depicts a front view of a transmission group according to an embodiment of the present invention;

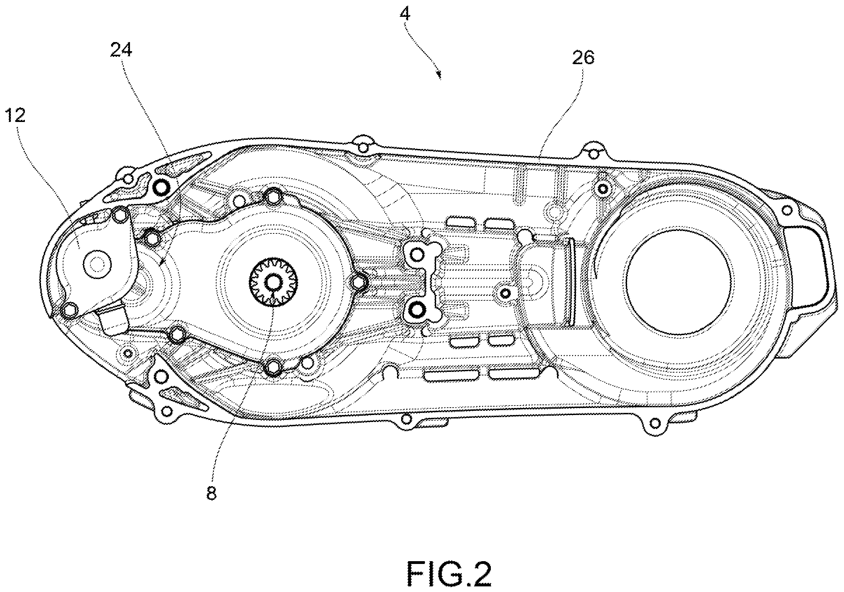

figure 2 depicts a front view, on the inner side, of the closing carter of the transmission group in figure 1;

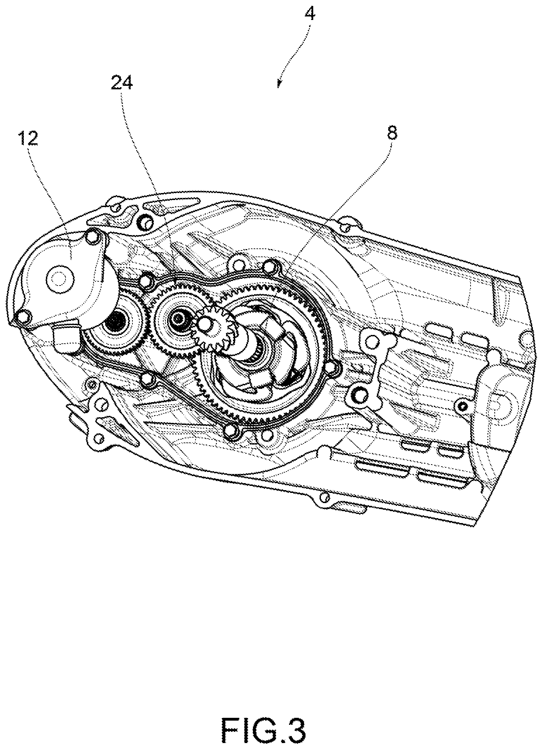

figure 3 depicts a partially exploded perspective view of the carter in figure 2;

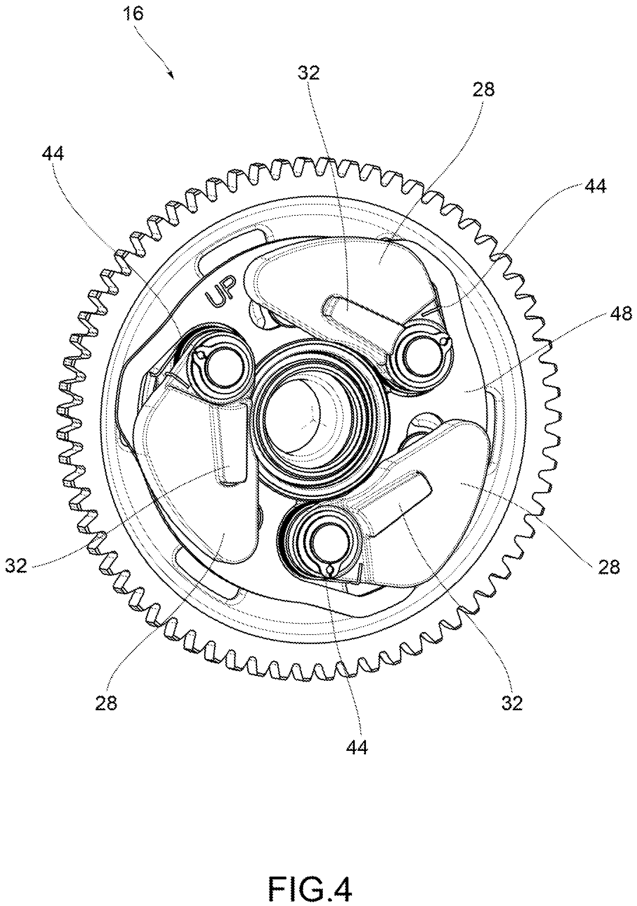

figure 4 depicts a perspective view of a control bushing of the transmission group according to the present invention;

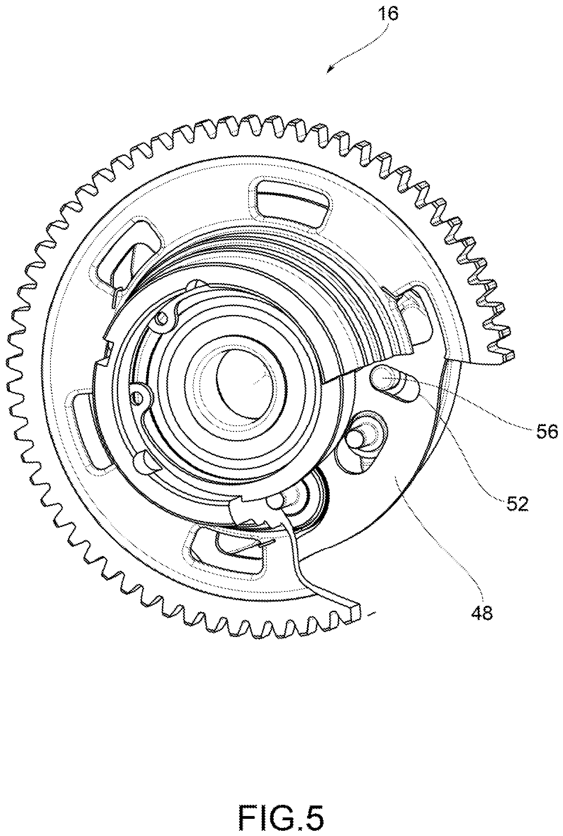

figure 5 depicts a further perspective view of the control bushing in figure 4, from a different angle;

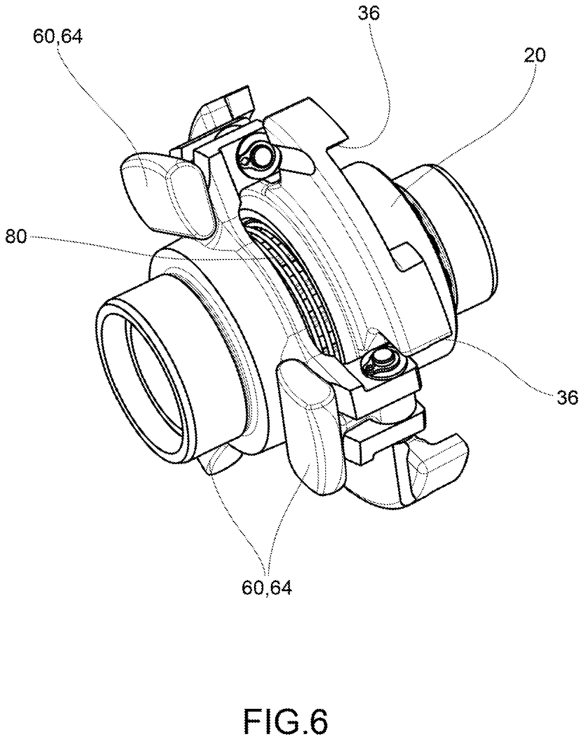

figure 6 depicts a perspective view of a driven transmission bushing completed with a transmission group according to an embodiment of the present invention;

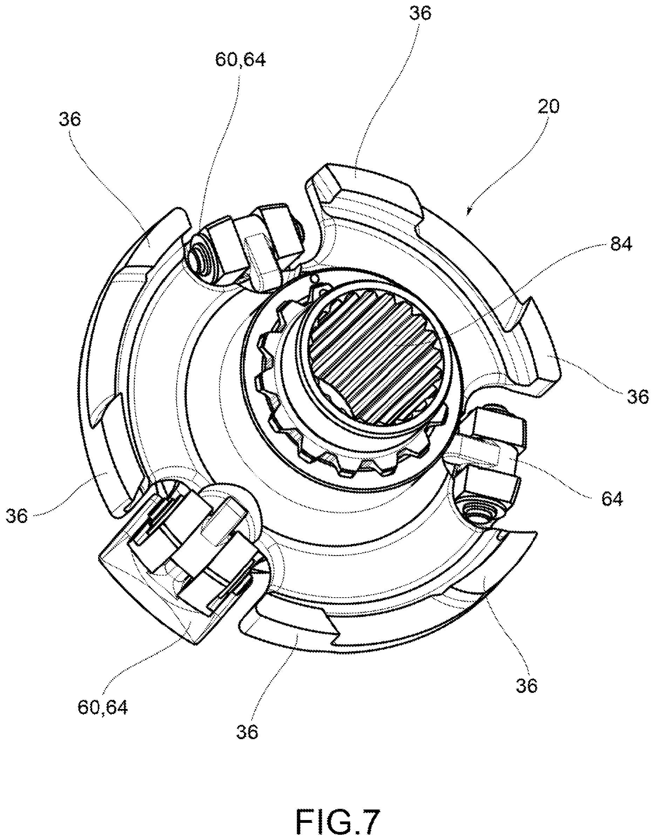

figure 7 depicts a perspective view of the driven transmission bushing in figure 6, from a different angle;

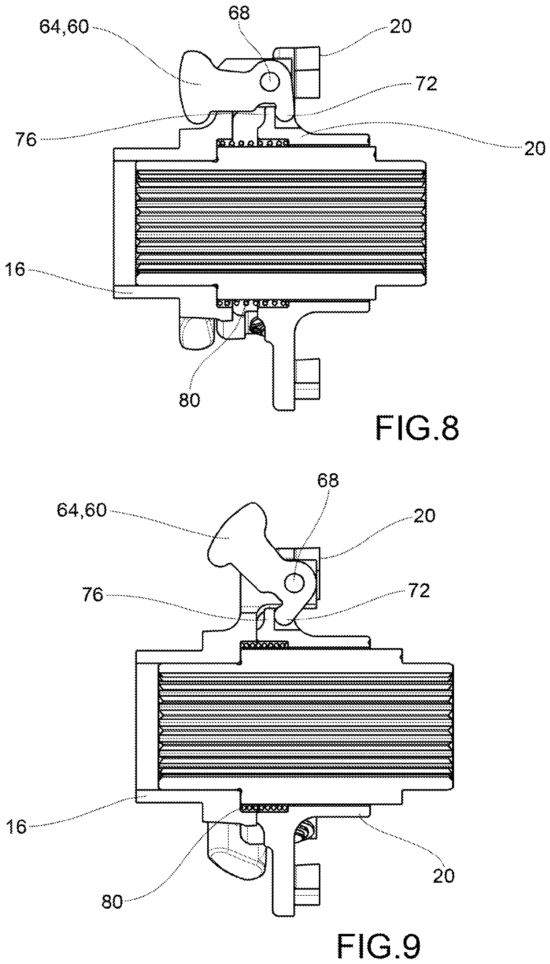

figures 8 and 9 depict views of the control and driven bushings, respectively, in engaged and disengaged configuration;

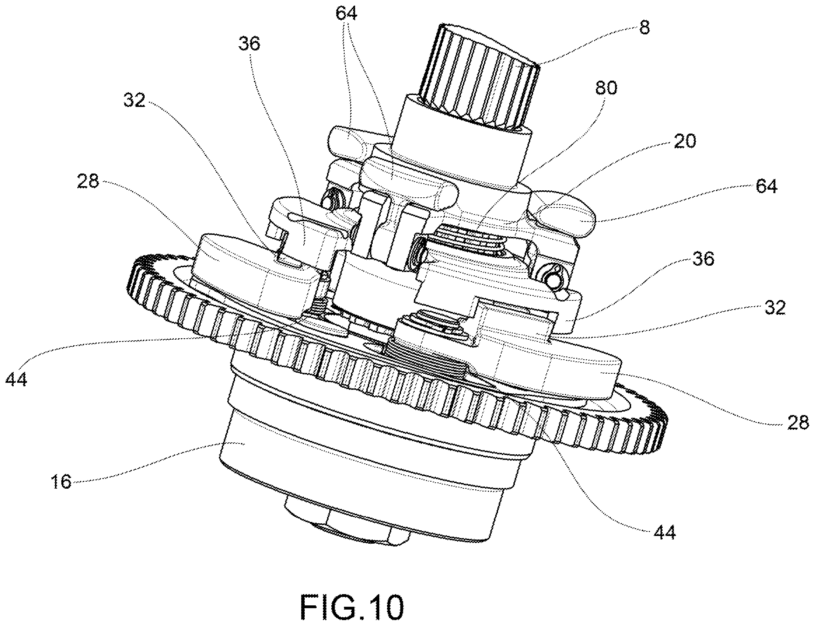

figure 10 depicts a perspective view of the control and driven bushings in axial position of transmission and reverse gear actuated;

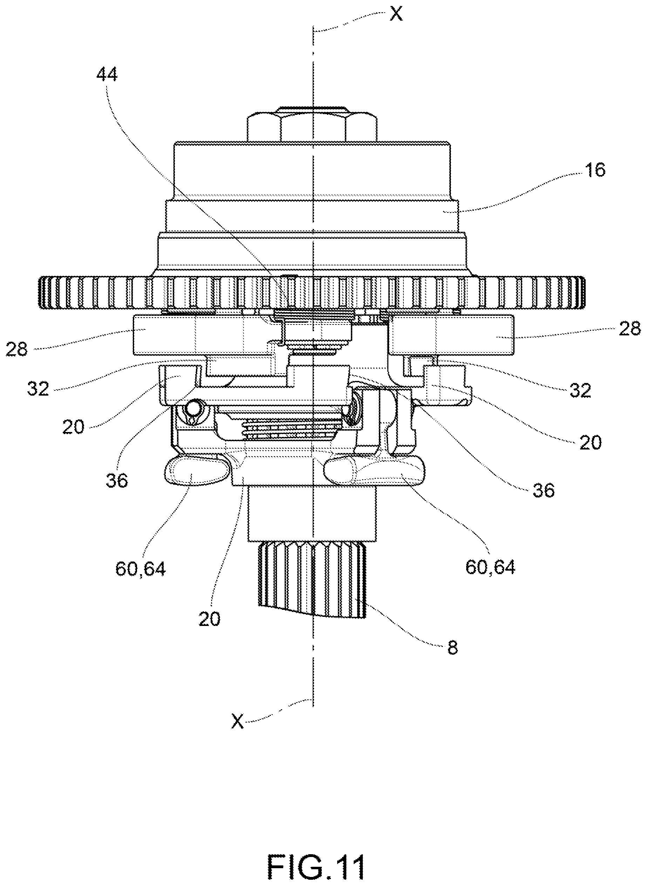

figure 11 depicts a perspective view of the control and driven bushings in axial position of motion transmission and reverse gear not actuated;

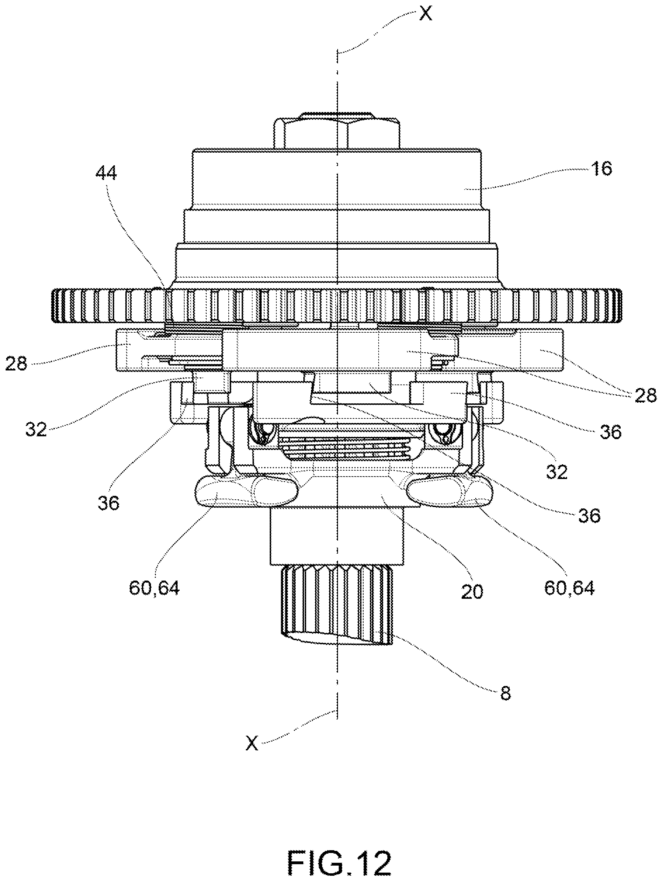

figure 12 depicts a perspective view of the control and driven bushings in axial position of motion transmission and reverse gear actuated;

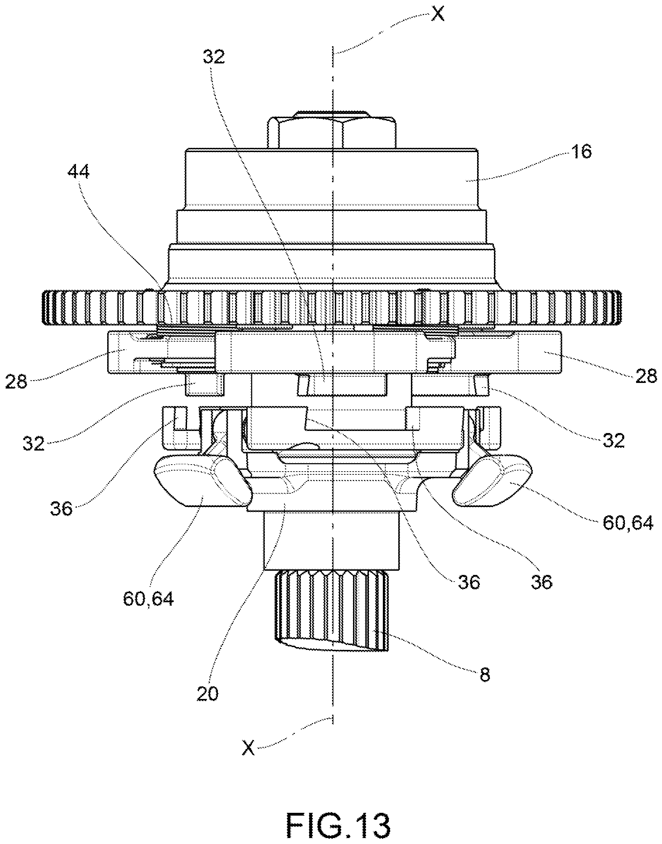

figure 13 depicts a perspective view of the control and driven bushings in axial safety position to prevent the actuation of reverse gear.

The elements or parts of elements common to the embodiments described below will be indicated using the same numerals.

### DETAILED DESCRIPTION

With reference to the aforesaid drawings, an overall diagrammatic view of a transmission group for motor vehicles according to the present invention is indicated as a whole by numeral 4.

For the purposes of the present invention, it is worth noting that the term motorcycle means any motor vehicle having at least two wheels, i.e. a front wheel and a rear wheel. Therefore, three-wheel motorcycles also fall under such a definition, such as for example two paired and steered wheels on the front axle, and one driving wheel on the rear axle, but also motorcycles comprising one steered wheel on the front axle and two driving wheels on the rear axle. Finally, the so-called motor vehicle having two wheels at the front axle and two wheels at the rear axle also fall under the definition of motorcycle.

The transmission group 4 for motor vehicles comprises a drive wheel axle 8 operatively connected to a main transmission (not shown), and operationally connectable, via the main transmission, to an internal combustion engine for forward travel of the motor vehicle.

For example, the main transmission may be a transmission of belt or chain type, and even of gear cascade type and the like.

Preferably, the main transmission is of the continuously variable transmission ratio type, also referred to as CVT or variator type.

The transmission group 4 comprises an auxiliary electric motor 12 for reversing the motor vehicle. For the purposes of the present invention, the type of electric motor used is not identified; obviously, the power of the electric motor is to be congruent with the mass and type of vehicle on which it is mounted.

The auxiliary electric motor 12 is preferably arranged on the opposite side of the main transmission, with respect to the drive wheel axle 8.

The auxiliary electric motor 12 in turn may be coaxial with the drive wheel axle 8.

The auxiliary electric motor 12 and the auxiliary transmission 24 are preferably supported by a closing carter 26 of the transmission group (4), which can be applied to a main body (27) of the transmission group (4) containing the main transmission.

The transmission group 4 further comprises a control bushing 16 and a transmission driven bushing 20.

The control bushing 16 is driven in rotation by said auxiliary electric motor 12; the kinematic connection may be direct, or preferably an auxiliary transmission 24 may be provided, comprising gear, chain and/or belt return means.

The transmission driven bushing 20, in turn, is operatively connected to the drive wheel axle 8 of the motor vehicle.

The control bushing 16 is configured to centrifugally engage the transmission driven bushing 20 when the auxiliary motor 12 is on and drives in rotation the control bushing 16.

Thereby, the centrifugal engagement between the two bushings 16, 20 occurs only after the auxiliary electric motor is actuated.

The mutual arrangement between the two bushings 16, 20 may be variable; preferably, for the purposes of the overall containment of the volumes, the control bushing 16 and the transmission driven bushing 20 are coaxial with the drive wheel axle 8 and rotatable with the latter around an axis of rotation X-X during reversing.

In detail, the control bushing 16 supports centrifugal clutch masses 28 comprising engaging driving teeth 32 configured to engage, in a radially extracted condition, corresponding abutments 36 of the transmission driven bushing 20 so as to rotate the control bushing 16 and the transmission driven bushing 20 together.

The centrifugal clutch masses 28 are preferably hinged on rotation pivots 40 angularly evenly spaced with respect to the axis of rotation X-X.

For example, three centrifugal clutch masses 28 with related rotation pivots 40 angularly spaced by 120° may be used.

According to an embodiment, said rotation pivots 40 are arranged parallel to the axis of rotation X-X.

According to a further possible embodiment, the centrifugal clutch masses are guided by radial guides (not shown) which guide the extracting movement thereof to engage the corresponding abutments 36 of the transmission driven bushing 20 under the action of the centrifugal force.

Regardless of the type of guide provided, the centrifugal clutch masses 28 are preferably provided with return springs 44 which are sized to recall the driving teeth 32 in a retracted position to disengage the abutments 36 when the auxiliary electric motor 12 is deactivated and no longer drives the control bushing 16 in rotation.

According to an embodiment, the control bushing 16 is provided with a synchronization plate 48 which supports and connects the centrifugal clutch masses 28 together, thus synchronizing the radial position thereof with respect to the axis of rotation X-X.

For example, the synchronization plate 48 is provided with slots 52; each slot 52 in turn slidably engages a guide pin 56 which is integral with each centrifugal clutch mass 28.

The radial extraction movement of the centrifugal clutch masses 28 can be synchronized due to the synchronization plate so that the engagement with each corresponding abutment 36 occurs simultaneously: thereby, the engagement uniformity is ensured and overloading the individual pairs of driving teeth 32 and abutments 36 is avoided.

The use of centrifugal clutch masses 28 is *per se* a first form of safety against the accidental actuation of the reverse gear given that, if the control bushing 16 does not reach given rotation conditions, the engagement with the transmission driven bushing 20 cannot take place.

According to a possible embodiment, the transmission group 4 is provided with a centrifugal safety system 60 associated with the transmission driven bushing 20 which prevents the reverse gear from being actuated during forward travel.

In particular, the centrifugal safety system 60 comprises a plurality of safety centrifugal masses 64, rotatably connected to the transmission driven bushing 20 and configured to axially move the abutments 36 of the transmission driven bushing 20 so as to prevent the engagement of the driving teeth 32 when the axle of the transmission driven bushing 20 rotates over a second rotation speed threshold.

According to a possible embodiment, the safety centrifugal masses 64 are hinged with respect to safety pivots 68 arranged in tangential direction, on a plane perpendicular to the axis of rotation X-X.

The safety centrifugal masses 64 comprise a front nose 72 coupled to a front abutment 76 of the transmission driven bushing 20 so as to axially move the transmission driven bushing 20, thus rotating around the safety pivots 68.

In order to allow this axial movement, according to a possible embodiment, the transmission driven bushing 20 is mounted to an axial groove 84 which is coaxial with the axis of rotation X-X and is rotationally integral with the drive wheel axle 8.

The centrifugal safety system 60 preferably comprises an axial return spring 80 which influences the transmission driven bushing 20 in axial engagement position with the control bushing 16: thereby, in forward travel condition, by acting on the safety centrifugal masses 64, the centrifugal force overcomes the bias of the axial return spring 80 and disengages the control bushing 16 from the transmission driven bushing 20, thus preventing any mechanical actuation of reverse gear.

When the centrifugal force is reduced, for example because the vehicle is substantially stationary, the engagement between the control bushing 16 and the transmission driven bushing 20 is obtained due to the axial return spring 80, whereby the reverse gear of the vehicle may be actuated by virtue of to the auxiliary electric motor 12.

The operation of the transmission group according to the present invention is now described.

As described, the motion transmission system between the control bushing 16 and the transmission driven bushing 20 occurs by centrifugal actuation due to the radial opening of the centrifugal clutch masses 28 which makes the two bushings 16, 20 integral via the ensured contact by the driving teeth 32 of the control bushing 16 and the respective abutments 36 of the transmission driven bushing 20. Said centrifugal actuation occurs by the inertial impulse generated by the actuation of the auxiliary motor 12. Therefore, the centrifugal clutch masses 28 remain in expanded position due to the friction force between the contact surfaces of the clutch masses 28 and of the abutments 36 until the thrust of the auxiliary motor 12 ends and the speed of the control bushing 16 is greater than 160 rpm.

The disengagement between the control bushing 16 and the transmission driven bushing 20, and therefore of the respective driving teeth 32 and abutments 36, occurs as the action of the auxiliary electric motor 12 ceases due to the contribution of the return springs 44.

Both the engagement and the disengagement system ensured by the opening/closing of the centrifugal clutch masses 28 occurs simultaneously and synchronously due to the intervention of the synchronization plate 48 which, via the guide pin 56 and slot 52, connect the centrifugal clutch masses themselves.

An ON/OFF control of the auxiliary electric motor may be obtained with a single rotation direction due to the above-mentioned feature of the engagement/disengagement system between the two bushings 16, 20.

The centrifugal safety system 60 which does not allow the actuation of reverse gear during normal travel of the vehicle is on the transmission driven bushing 20, and namely when the drive wheel axle 8, which is rotated by the thermal engine, exceeds a given revolution speed.

As the revolutions of the shaft of the drive wheel axle 8 increase beyond a predetermined value, the safety centrifugal masses 64, which cause the axial position of the transmission driven bushing 20, open, thus causing the bushing itself to axially slide on the axial grooved profile 84, thus bringing it to a disengaged position. When the revolutions of the shaft of the drive wheel axle 8 return below a given predetermined speed, the safety centrifugal masses 64 close due to the action of the axial return spring 80, which returns the transmission driven bushing 20 to the motion transmission position. Said predetermined value or speed preferably is about 350 revolutions per minute.

As may be appreciated from the above description, the present invention allows the drawbacks introduced in the known art to be overcome.

In particular, the invention allows the motor vehicle to be moved in reverse gear, while conveniently remaining in the saddle, in a quick and effective manner. The actuation of the reverse gear does not require the use of pedals or levers, like in solutions of gears of known type, hence the user may actuate the reverse gear with the possibility of taking advantage of resting both feet on the ground.

The transmission group has significantly reduced volumes and may easily be accommodated in the transmission carter without resulting in any modification on the side of the drive shaft.

Moreover, the transmission group may be applied as add-on or retro-fit device to a pre-existing transmission by simply modifying the closing carter of the group and obviously adding the related electrical connections, electronic controls and the related operating controls to the handle.

The device is provided with a plurality of safety devices which mechanically and/or electronically avoid the possibility of inadvertently engaging reverse gear in forward travel conditions of the motor vehicle.

The transmission system of the present invention is simple given that the actuation of reverse gear occurs with an electric device only having ON/OFF control due to a mechanical engagement/disengagement of centrifugal type.

Advantageously, the actuation system develops on the outer part, on the transmission side, so as to keep the general layout of the engine of the motor vehicle intact.

Those skilled in the art, aiming at meeting contingent and specific needs, can make several changes and variations to the transmission groups and to the motor vehicles described above, all contained within the scope of the invention, which is defined by the following claims.

## Claims

1. Transmission group (4) for motor vehicles, including
- a drive wheel axle (8) operationally connected to a main transmission, and operationally connectable, via the main transmission, to an internal combustion engine of the motor vehicle for forward travel of the motor vehicle,
- an auxiliary electric motor (12) for reversing the motor vehicle,
- a control bushing (16) driven in rotation by means of said auxiliary electric motor (12),
- a transmission driven bushing (20), operatively connected to the drive wheel axle (8),
- wherein the control bushing (16) is configured to centrifugally engage the transmission driven bushing (20) when its rotational speed exceeds a predetermined threshold.

2. Transmission group (4) for motor vehicle according to claim 1, wherein the control bushing (16) and the driven transmission bushing (20) are coaxial with the drive wheel axle (8) and rotatable with the latter around an axis of rotation (X-X), during reverse gear.

3. Transmission group (4) for motor vehicle according to claim 1 or 2, wherein the control bushing (16) is operatively connected to the auxiliary electric motor (12) through an auxiliary transmission (24).

4. Transmission group (4) for motor vehicle according to any one of the preceding claims, wherein the control bushing (16) supports centrifugal clutch masses (28) comprising engaging driving teeth (32) configured to engage, in a radially extracted condition, corresponding abutments (36) of the transmission driven bushing (20), so as to make the control bushing (16) and the transmission bushing (20) rotate together.

5. Transmission group (4) for motor vehicle according to claim 4, wherein the centrifugal clutch masses (28) are hinged on rotation pivots (40) angularly evenly spaced with respect to the rotation axis (X-X).

6. Transmission group (4) for motor vehicle according to claim 4 or 5, wherein the centrifugal clutch masses (28) are provided with return springs (44) sized to recall the driving teeth (32) in a retracted position, so as to disengage the abutments (36), when the rotation speed of the control bushing (16) is less than said predetermined threshold.

7. Transmission group (4) for motor vehicle according to any one of claims 4 to 6, in which the control bushing (16) is provided with a synchronization plate (48) which supports and connects each other the centrifugal clutch masses (28), synchronizing their radial position with respect to the axis of rotation (X-X).

8. Transmission group (4) for motor vehicle according to claim 7, wherein the synchronization plate (48) is provided with slots (52), each slot (52) slidably engaging a guide pin (56) integral with each centrifugal clutch mass (28).

9. Transmission group (4) for motor vehicle according to any one of the preceding claims, wherein the transmission group (4) is provided with a centrifugal safety system (60) associated with the transmission driven bushing (20) which prevents reverse actuation during forward travel.

10. Transmission group (4) for motor vehicle according to claim 9, wherein the centrifugal safety system (60) comprises a plurality of safety centrifugal masses (64), rotary connected to the transmission driven bushing (20) and configured to axially move the abutments (36) in order to prevent the engagement of the driving teeth (32), when the drive axle of the driven transmission bushing (20) rotates over a second rotation speed threshold.

11. Transmission group (4) for motor vehicle according to claim 10, wherein the centrifugal safety system (60) comprises an axial return spring (80) which influences the transmission driven bushing (20) in axial engagement position with the control bushing (16).

12. Transmission group (4) for motor vehicle according to any one of the preceding claims, in which the auxiliary electric motor (12) is arranged on the opposite side of the main transmission, with respect to the drive wheel axle (8).

13. Transmission group (4) for motor vehicle according to any one of claims 1 to 12, in which the auxiliary electric motor (12) is coaxial with the drive wheel axle (8).

14. Transmission group (4) for motor vehicle according to claims 2 and 3 and any one of claims 4 to 13, wherein the auxiliary electric motor (12) and the auxiliary transmission (24) are supported by a closing carter (26) of the transmission group (4), applicable to a main body (27) of the transmission group (4) containing the main transmission.

15. Transmission group (4) for motor vehicle according to any one of the preceding claims, in which the main transmission is of the continuously variable transmission ratio (CVT) type.

16. Motor vehicle comprising a transmission group (4) according to any one of the previous claims and an internal combustion engine operationally connected to the drive wheel axle (8).

## Patentansprüche

1. Getriebegruppe (4) für Motorfahrzeuge, umfassend
- eine Antriebsradachse (8), welche für eine Vorwärtsfahrt des Motorfahrzeugs betriebsmäßig mit einem Hauptgetriebe verbunden ist und über das Hauptgetriebe betriebsmäßig mit einem Verbrennungsmotor des Motorfahrzeugs verbindbar ist,
- einen elektrischen Hilfsmotor (12) zum Rückwärtsfahren mit dem Motorfahrzeug,
- eine Steuerbuchse (16), welche mittels des elektrischen Hilfsmotors (12) in Drehung versetzt wird,
- eine Getriebeabtriebsbuchse (20), welche operativ mit der Antriebsradachse (8) verbunden ist,
- wobei die Steuerbuchse (16) dazu eingerichtet ist, die Getriebeabtriebsbuchse (20) zentrifugal in Eingriff zu nehmen, wenn ihre Drehzahl einen vorbestimmten Schwellenwert überschreitet.

2. Getriebegruppe (4) für ein Motorfahrzeug nach Anspruch 1, wobei die Steuerbuchse (16) und die Getriebeabtriebsbuchse (20) koaxial zu der Antriebsradachse (8) sind und während eines Rückwärtsgangs mit der Letzteren um eine Drehachse (X-X) drehbar sind.

3. Getriebegruppe (4) für ein Motorfahrzeug nach Anspruch 1 oder 2, wobei die Steuerbuchse (16) durch ein Hilfsgetriebe (24) operativ mit dem elektrischen Hilfsmotor (12) verbunden ist.

4. Getriebegruppe (4) für ein Motorfahrzeug nach einem der vorhergehenden Ansprüche, wobei die Steuerbuchse (16) Fliehkraftkupplungsmassen (28) haltert, welche eingreifende Antriebszähne (32) umfassen, die dazu eingerichtet sind, in einem radial extrahierten Zustand entsprechende Anschläge (36) der Getriebeabtriebsbuchse (20) in Eingriff zu nehmen, um die Steuerbuchse (16) und die Getriebebuchse (20) zusammen rotieren zu lassen.

5. Getriebegruppe (4) für ein Motorfahrzeug nach Anspruch 4, wobei die Fliehkraftkupplungsmassen (28) gelenkig an Drehzapfen (40) gelagert sind, welche in Bezug auf die Drehachse (X-X) winkelmäßig gleichmäßig beabstandet sind.

6. Getriebegruppe (4) für ein Motorfahrzeug nach Anspruch 4 oder 5, wobei die Fliehkraftkupplungsmassen (28) mit Rückstellfedern (44) bereitgestellt sind, welche derart bemessen sind, dass sie die Antriebszähne (32) in eine zurückgezogene Position zurückrufen, um die Anschläge (36) außer Eingriff zu bringen, wenn die Drehzahl der Steuerbuchse (16) niedriger als der vorbestimmte Schwellenwert ist.

7. Getriebegruppe (4) für ein Motorfahrzeug nach einem der Ansprüche 4 bis 6, bei welcher die Steuerbuchse (16) mit einer Synchronisationsplatte (48) bereitgestellt ist, welche die Fliehkraftkupplungsmassen (28) haltert und miteinander verbindet sowie deren radiale Position in Bezug auf die Drehachse (X-X) synchronisiert.

8. Getriebegruppe (4) für ein Motorfahrzeug nach Anspruch 7, wobei die Synchronisationsplatte (48) mit Schlitzen (52) bereitgestellt ist, wobei jeder Schlitz (52) verschiebbar einen Führungsstift (56) in Eingriff nimmt, welcher integral mit jeder Fliehkraftkupplungsmasse (28) ausgebildet ist.

9. Getriebegruppe (4) für ein Motorfahrzeug nach einem der vorhergehenden Ansprüche, wobei die Getriebegruppe (4) mit einem der Getriebeabtriebsbuchse (20) zugeordneten Fliehkraftsicherheitssystem (60) bereitgestellt ist, welches während einer Vorwärtsfahrt eine Rückwärtsbetätigung verhindert.

10. Getriebegruppe (4) für ein Motorfahrzeug nach Anspruch 9, wobei das Fliehkraftsicherheitssystem (60) eine Mehrzahl von Sicherheitsfliehkraftmassen (64) umfasst, welche mit der Getriebeabtriebsbuchse (20) drehverbunden sind und dazu eingerichtet sind, die Anschläge (36) axial zu bewegen, um den Eingriff der Antriebszähne (32) zu verhindern, wenn sich die Antriebsachse der Getriebeabtriebsbuchse (20) oberhalb eines zweiten Drehzahlschwellenwerts dreht.

11. Getriebegruppe (4) für ein Motorfahrzeug nach Anspruch 10, wobei das Fliehkraftsicherheitssystem (60) eine axiale Rückstellfeder (80) umfasst, welche die Getriebeabtriebsbuchse (20) in eine axiale Eingriffsposition zu der Steuerbuchse (16) beeinflusst.

12. Getriebegruppe (4) für ein Motorfahrzeug nach einem der vorhergehenden Ansprüche, bei welcher der elektrische Hilfsmotor (12) in Bezug auf die Antriebsradachse (8) an der entgegengesetzten Seite des Hauptgetriebes angeordnet ist.

13. Getriebegruppe (4) für ein Motorfahrzeug nach einem der Ansprüche 1 bis 12, bei welcher der elektrische Hilfsmotor (12) koaxial zu der Antriebsradachse (8) ist.

14. Getriebegruppe (4) für ein Motorfahrzeug nach den Ansprüchen 2 und 3 und einem der Ansprüche 4 bis 13, wobei der elektrische Hilfsmotor (12) und das Hilfsgetriebe (24) von einem geschlossenen Gehäuse (26) der Getriebegruppe (4) gehaltert sind, welches an einem Hauptkörper (27) der Getriebegruppe (4) einsetzbar ist, welcher das Hauptgetriebe enthält.

15. Getriebegruppe (4) für ein Motorfahrzeug nach einem der vorhergehenden Ansprüche, bei welcher das Hauptgetriebe vom Typ eines stufenlos verstellbaren Übersetzungsverhältnisses (CVT) ist.

16. Motorfahrzeug, umfassend eine Getriebegruppe (4) nach einem der vorhergehenden Ansprüche und einen Verbrennungsmotor, welcher betriebsmäßig mit der Antriebsradachse (8) verbunden ist.

## Revendications

1. Groupe de transmission (4) pour véhicules à moteur, comportant
- un essieu de roue motrice (8) raccordé fonctionnellement à une transmission principale, et pouvant être raccordé fonctionnellement, via la transmission principale, à un moteur à combustion interne du véhicule à moteur pour un déplacement en marche avant du véhicule à moteur,
- un moteur électrique auxiliaire (12) pour mettre en marche arrière le véhicule à moteur,
- une bague de commande (16) entraînée en rotation au moyen dudit moteur électrique auxiliaire (12),
- une bague entraînée de transmission (20), raccordée fonctionnellement à l'essieu de roue motrice (8),
- dans lequel la bague de commande (16) est configurée pour engager de façon centrifuge la bague entraînée de transmission (20) lorsque sa vitesse de rotation dépasse un seuil prédéterminé.

2. Groupe de transmission (4) pour véhicule à moteur selon la revendication 1, dans lequel la bague de commande (16) et la bague de transmission entraînée (20) sont coaxiales avec l'essieu de roue motrice (8) et rotatives avec ce dernier autour d'un axe de rotation (X-X), pendant le rapport en marche arrière.

3. Groupe de transmission (4) pour véhicule à moteur selon la revendication 1 ou 2, dans lequel la bague de commande (16) est raccordée fonctionnellement au moteur électrique auxiliaire (12) par le biais d'une transmission auxiliaire (24).

4. Groupe de transmission (4) pour véhicule à moteur selon l'une quelconque des revendications précédentes, dans lequel la bague de commande (16) supporte des masses d'embrayage centrifuges (28) comprenant des dents d'entraînement d'engagement (32) configurées pour engager, dans une condition radialement extraite, des butées (36) correspondantes de la bague entraînée de transmission (20), de façon à mettre en rotation ensemble la bague de commande (16) et la bague de transmission (20).

5. Groupe de transmission (4) pour véhicule à moteur selon la revendication 4, dans lequel les masses d'embrayage centrifuges (28) sont articulées sur des pivots de rotation (40) espacés de façon angulairement régulière vis-à-vis de l'axe de rotation (X-X).

6. Groupe de transmission (4) pour véhicule à moteur selon la revendication 4 ou 5, dans lequel les masses d'embrayage centrifuges (28) sont munies de ressorts de rappel (44) dimensionnés pour ramener les dents d'entraînement (32) dans une position rétractée, de façon à désengager les butées (36), lorsque la vitesse de rotation de la bague de commande (16) est inférieure audit seuil prédéterminé.

7. Groupe de transmission (4) pour véhicule à moteur selon l'une quelconque des revendications 4 à 6, dans lequel la bague de commande (16) est munie d'une plaque de synchronisation (48) qui supporte et raccorde mutuellement les masses d'embrayage centrifuges (28), en synchronisant leur position radiale vis-à-vis de l'axe de rotation (X-X).

8. Groupe de transmission (4) pour véhicule à moteur selon la revendication 7, dans lequel la plaque de synchronisation (48) est munie de fentes (52), chaque fente (52) engageant en coulissement une tige de guidage (56) solidaire de chaque masse d'embrayage centrifuge (28).

9. Groupe de transmission (4) pour véhicule à moteur selon l'une quelconque des revendications précédentes, dans lequel le groupe de transmission (4) est muni d'un système de sécurité centrifuge (60) associé à la bague entraînée de transmission (20) qui empêche un actionnement de marche arrière pendant le déplacement en marche avant.

10. Groupe de transmission (4) pour véhicule à moteur selon la revendication 9, dans lequel le système de sécurité centrifuge (60) comprend une pluralité de masses centrifuges de sécurité (64), raccordées en rotation à la bague entraînée de transmission (20) et configurées pour déplacer axialement les butées (36) afin d'empêcher l'engagement des dents d'entraînement (32), lorsque l'essieu moteur de la bague de transmission entraînée (20) tourne au-delà d'un second seuil de vitesse de rotation.

11. Groupe de transmission (4) pour véhicule à moteur selon la revendication 10, dans lequel le système de sécurité centrifuge (60) comprend un ressort de rappel axial (80) qui influence la bague entraînée de transmission (20) en position d'engagement axial avec la bague de commande (16).

12. Groupe de transmission (4) pour véhicule à moteur selon l'une quelconque des revendications précédentes, dans lequel le moteur électrique auxiliaire (12) est agencé sur le côté opposé de la transmission principale, vis-à-vis de l'essieu de roue motrice (8).

13. Groupe de transmission (4) pour véhicule à moteur selon l'une quelconque des revendications 1 à 12, dans lequel le moteur électrique auxiliaire (12) est coaxial avec l'essieu de roue motrice (8).

14. Groupe de transmission (4) pour véhicule à moteur selon les revendications 2 et 3 et l'une quelconque des revendications 4 à 13, dans lequel le moteur électrique auxiliaire (12) et la transmission auxiliaire (24) sont supportés par un carter de fermeture (26) du groupe de transmission (4), applicable à un corps principal (27) du groupe de transmission (4) contenant la transmission principale.

15. Groupe de transmission (4) pour véhicule à moteur selon l'une quelconque des revendications précédentes, dans lequel la transmission principale est de type à rapport de transmission à variation continue (CVT).

16. Véhicule à moteur comprenant un groupe de transmission (4) selon l'une quelconque des revendications précédentes et un moteur à combustion interne raccordé fonctionnellement à l'essieu de roue motrice (8).
